(19) **Europäisches Patentamt**

**European Patent Office**

**Office européen des brevets**

(11) **EP 0 843 157 B1**

(12) **EUROPEAN PATENT SPECIFICATION**

(45) Date of publication and mention
of the grant of the patent:
**19.03.2003 Bulletin 2003/12**

(51) Int Cl.7: **G01B 11/16**, G01B 11/24

(21) Application number: **97203527.3**

(22) Date of filing: **12.11.1997**

(54) **Method and apparatus for in-field measurement of permanent deformations on plant components**

Verfahren und Vorrichtung zum In-Situ-Messen von permanenten Deformationen an Werkstücken

Procédé et dispositif pour la mesure in situ de déformations permanentes d'élements de construction

(84) Designated Contracting States:
**DE ES FR GB GR IT NL PT**

(30) Priority: **14.11.1996 IT MI962362**

(43) Date of publication of application:
**20.05.1998 Bulletin 1998/21**

(73) Proprietor: **CESI Centro Elettrotecnico
Sperimentale Italiano Giacinto Motta S.P.A.
20134 Milano (IT)**

(72) Inventors:
• **Rizzi, Maria Luciana
20040 Busnago (IT)**
• **Delvo', Pierino
20047 Brugherio (IT)**
• **Ghia, Sergio
27058 Voghera (IT)**

• **Gramatica, Paolo
20058 Villasanta (IT)**

(74) Representative: **Mittler, Enrico
c/o Mittler & C. s.r.l.,
Viale Lombardia, 20
20131 Milano (IT)**

(56) References cited:
**EP-A- 0 275 982          EP-A- 0 455 823
US-A- 4 488 172          US-A- 4 591 996**

• **PATENT ABSTRACTS OF JAPAN vol. 013, no. 377 (P-922), 22 August 1989 (1989-08-22) & JP 01 131406 A (MITSUBISHI HEAVY IND LTD), 24 May 1989 (1989-05-24)**
• **PATENT ABSTRACTS OF JAPAN vol. 004, no. 122 (P-025), 29 August 1980 (1980-08-29) & JP 55 078204 A (MITSUBISHI HEAVY IND LTD), 12 June 1980 (1980-06-12)**

**Description**

The present invention refers to a method for in-field measurement of permanent deformations on plant components, in particular for measuring permanent deformations on metal components of plants operating at high temperatures and in heavy ambient conditions, and to the assembly of instruments for performing said method.

With the materials normally employed to produce metal components (piping, tubing etc.) of plants operating at high temperatures (in the range of 400-600 °C), the permanent deformation estimated during the project phase is within the range of 1-2% in a span of 100,000-200,000 hours of service. It is also known that dimensional alterations take place more evidently in the most critical areas of the plant, for example in the bending portions of pipes.

In order to control the behaviour of components that are in service with respect to project expectations, it is necessary to avail of instruments that can provide for a high measuring sensitivity, as well as for the possibility to make surveys at rather long time intervals, typically every 10,000 or 20,000 hours.

For the measurement of deformations various kinds of techniques are known, among which optical techniques have a considerable importance. Among these, one of the most promising is the one known as moiré interferometric technique.

As known, the principle which the moiré interferometric technique is based on is the comparison of two periodic structures, called grids; when two grids with different pitch are superimposed, fringes of interference also called moiré fringes are generated, whose pitch is related to the difference in pitch between the two grids.

From EP-A-0 275 982 it is known to engrave a grid on the object, to project a light grid on said object, and to detect object deformations from the moiré fringes.

For the implementation of such principle, one possibility consists in physically applying a grid to the component whose deformations must be measured, and in comparing the grid applied to the component with a reference grid.

Currently, the grid is applied (a process also referred to as "writing") to the component in a laboratory, under controlled ambient conditions, and not directly in field, where ambient conditions are more critical (high temperatures, presence of corrosive factors, presence of oxidation on the components, presence of fumes, of dust, of mechanical oils, of greases, etc.). The operations of comparing (reading) the grid created on the component with a reference grid in order to determine the component deformation are also not performed in field, but in laboratory. In other words, the assembly of the instruments for writing and reading the grid on the component is installed permanently in a laboratory, in order to operate under controlled ambient conditions, and it is the component whose deformation must be measured to be taken from the laboratory to the field and vice-versa.

This obviously complicates the measurement operations, as it makes it necessary to remove the component from the plant in order to take it to the laboratory.

In view of the state of the art described, object of the present invention is to provide for a method for the measurement of deformations undergone by plant components which allows to take the measurement of deformations on the component directly in field, without having to perform any operation in laboratory.

Another purpose of the present invention is to provide for an apparatus for performing the aforementioned method.

According to the present invention, such object is attained thanks to a method for the measurement of deformations on plant components as defined in claim 1.

Also according to the present invention, an apparatus is provided for the measurement of deformations of plant components, as defined in claim 25.

The method according to the present invention, and the apparatus to implement it, have the peculiar and advantageous characteristic to allow the application of the periodic structures on the component and the subsequent measurement of deformations directly in field.

These and other characteristics and advantages of the present invention will be rendered even more evident by the following detailed description of an embodiment thereof, illustrated as a non-limiting example in the enclosed drawings, wherein:

Figure 1 schematically illustrates the moiré interferometric principle for the measurement of deformations;

Figure 2 shows a portion of a plant component of which the deformation is to be measured;

Figure 3 shows a portable equipment for the electro-deposition, directly in field, of a layer of protective material on one portion of surface of the plant component of which the deformation is to be measured;

Figure 4 shows an equipment for the deposition of a layer of photo-sensitive resins on said portion of the component surface;

Figure 5 shows in principle the optical scheme of a writing head for the impression of the photo-sensitive resin layer;

Figures 6A and 6B are cross sectional views of the component referring to two different phases of the method for the creation of a first periodic structure on the same component;

Figure 7 shows in principle the optical scheme of a reading head for reading the first periodic structure as formed on the component and for determining the deformations undergone by the same component;

Figure 8A shows an image of the moiré fringes of interference in case of null deformation (no fringes); Figure 8B shows a range of offset moiré fringes used as a reference for subsequent measurements; and

Figure 8C shows the comparison between the range of offset moiré fringes of Figure 8B, and a range of moiré fringes originated from a deformation of the component.

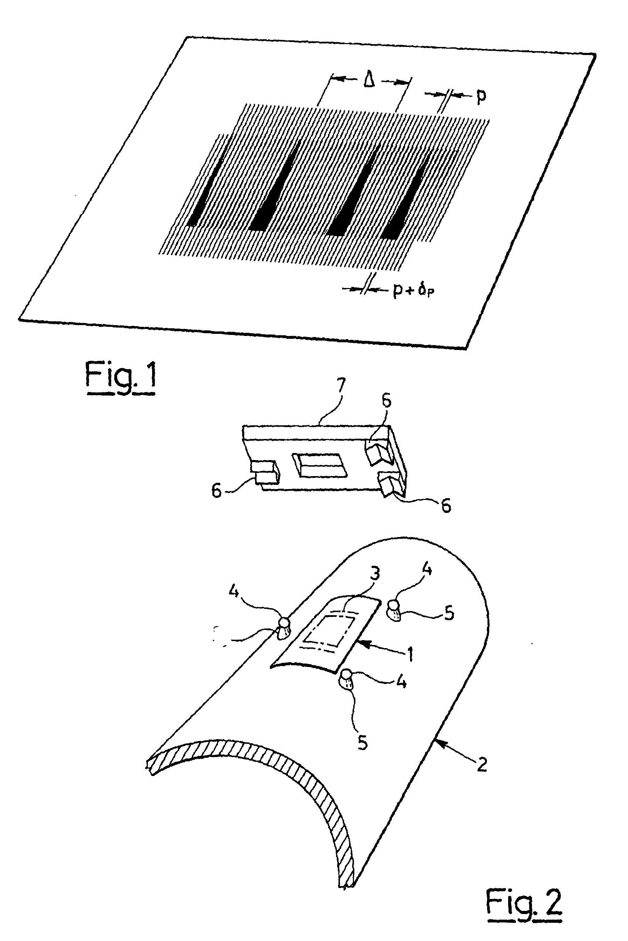

In Figure 1 there is shown schematically the optical principle on which moiré interferometric techniques for the measurement of deformations are based. Let's suppose to superimpose two grids with equal pitch (P), one of which has been subject to a longitudinal deformation (perpendicular to the grid lines) $\delta P$ (that is, the grid pitch is equal to $P + \delta P$): interference fringes called of moiré fringes form (the darker bands visible in the drawing), with a pitch $\Delta$ that depends on the pitch P of the non-deformed grid and on the extent $\delta P$ of deformation undergone by the grid, according to the ratio:

$$\Delta = P/\varepsilon$$

where as known $\varepsilon$ is equal to $\delta P/P$.

Therefore, once one knows the initial pitch P of the grid having undergone deformation (corresponding to the pitch of the other grid, used as reference grid) and one has measured the pitch $\Delta$ of the moiré fringes, it is possible to obtain the value of deformation $\varepsilon$. Measurement sensitivity is a function of the grids fineness, that is of the value of their pitch P.

The method for the measurement of deformation according to the present invention, that is based on the aforementioned principle of moiré interferometrics, provides for the formation of a grid on a plant component directly in field. Such grid is created by means of electroforming, according to the procedure described later.

With reference to Figure 2, a portion 1 of the surface of a plant component 2, on which the grid 3 (represented with dots and lines) must be created is first of all submitted to cleaning and buffing, in such a way as to make such portion of surface specular, with a degree of micro-roughness suitable for accommodating one or more grids. Surface cleaning can be executed by means of a sanding machine or sanding paper having progressively decreasing grain, starting for example from the value of 80 to a value of 600, so as to abrade the surface oxides that have formed on the component in field. For the buffing it is preferable to use abrading diamond pastes with progressively decreasing grain, as for example from 6 $\mu$m to 1 $\mu$m.

The portion of surface to be submitted to this treatment can have for example an area of 200x150 mm$^2$, sufficient to accommodate 2 to 4 grids each of 50x30 mm$^2$.

In correspondence of said cleaned and buffed portion of surface 1, some fixed references are then welded onto the component, by means of an appropriate jig, for the subsequent positioning of the writing and reading instrumentation of the grids. Such references, schematised in Figure 2, are preferably made of steel balls 4, preferably three in number, that are welded onto the component by means of appropriate supports 5 and suitable to engage in respective V section seats 6 that are provided for on the basements 7 of the grids writing and reading instruments (that will be described later). The balls 4, engaging in the respective seats 6 of the basements of the grids writing and reading instruments, allow to position said instruments in a correct and substantially automatic way, thus neutralising the influence of ambient disturbances and relieving the operator from the burden of proceeding with micrometric progressions. In other words, thanks to the fact that fixed references are provided on the component, the precision in positioning the grids writing and reading instruments is ensured at the design level, and it does not depend on the operator's practice.

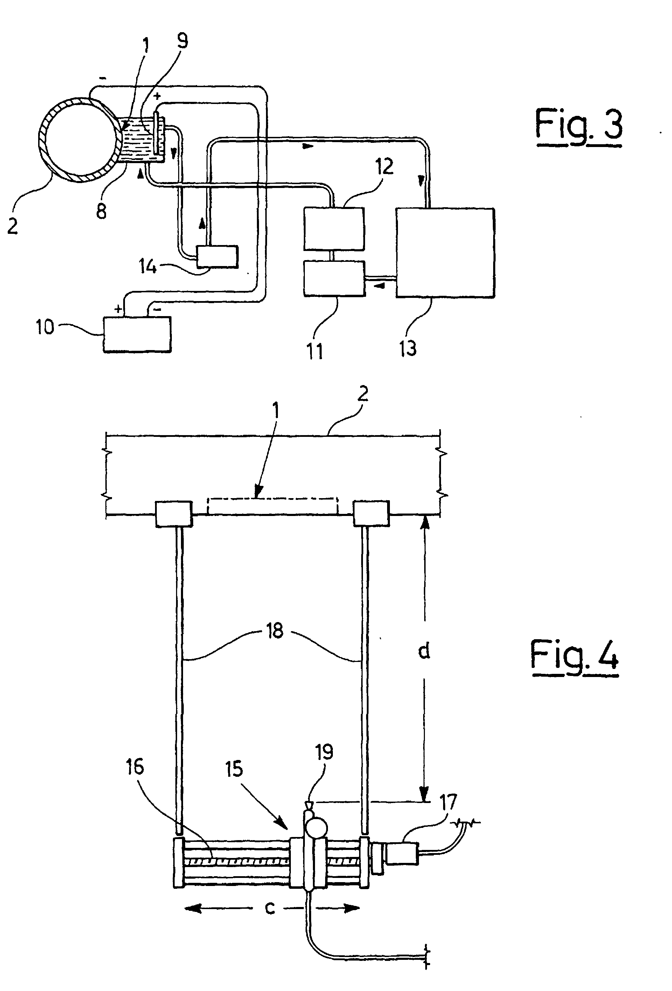

Since pipe surface is exposed to atmospheric agents it is subject to considerable oxidation phenomena, that can be such as to damage the measurement grid thus making it unserviceable. It is thus opportune to proceed to the deposition, on the portion of surface 1 of the component that has undergone buffing, of an anticorrosive protective layer, serving the purpose to insulate the measurement grid from corrosion. Experimental testing showed that the best structure for this protective coating consists of a layer of nickel with an approximate thickness of 30 $\mu$m, plus a layer of rhodium with an approximate thickness of 2 $\mu$m, both being electro-deposited on the component in field. These operations are performed directly in field by means of a portable electroforming system, shown in Figure 3, comprising a small tank 8 open on one side that is applied to the plant component 2 (for example a cylindrical pipe) in such a way that the portion of surface 1 of the component 2 acts as the wall of the small tank 8. A nickel electrode 9 is inserted in the tank and connected to the positive pole of a power supply 10, while the negative pole of the power supply 10 is connected to the component 2. A delivery pump 11, followed by a filter 12, provides to feed the small tank 8 with a bath of sulphammic nickel (Ni(NH$_2$SO$_3$)$_2$) contained in a main tank 13 provided with a thermostating system (not shown) that maintains the bath at an approximate temperature of 50 °C: a backflow pump 14 produces the return of the nickel bath from the small tank 8 to the main tank 13: the pumps 11 and 14 cause therefore the circulation of the nickel bath from the main tank 13 to the smaller tank 8 that is applied to the component, and the filter 12 allows to maintain the same bath free from residues. The nickel electrode 9 gives out the necessary material for the deposition of the nickel layer onto the surface of the component 2. In order to obtain a highly uniform deposition, the power provided by the power supply 10, should preferably be

of approximately 1A/dm$^2$, value with which about 12 μm/ hour of nickel are deposited on the surface of the component 2.

In the same way, a layer of rhodium approximately 2 μm thick is electro-deposited, on the portion of surface 1 of the component 2, to be associated with the anticorrosive nickel layer previously deposited. Differently from the process of deposition of the nickel layer, the rhodium bath is maintained at ambient temperature, and there is no recirculation: the small tank 8 contacting the component surface is simply filled with the solution, using an appropriate titanium electrode for the process of deposition.

At this point, on the portion of surface 1 of the component 2 a layer of photo-sensitive resins (photoresist) is deposited. The deposition is carried out, as shown in Figure 4, by means of spraying with an aerograph, the layer of photoresist having preferably an approximate thickness of 2μm. The aerograph 15 is mounted on a motorised guide, for example an endless screw 16 operated by an electric engine 17 and coupled to the component 2 by means of clamps 18. In this way it is possible to make a predetermined and repeatable number of subsequent passages, using different orientations of the aerograph steaming nozzle 19, in order to obtain a uniform coating of the surface portion 1 of the component. The aerograph steaming nozzle 19, preferably a medium type ("M") one, is preferably located at a distance d from the component surface 1 of approximately 280 mm, and the velocity of the aerograph progression along the motorised guide is preferably of approximately 15 mm/s, with a travel c of approximately 180 mm.

Since the material composing the photoresist is sensitive to the blue-violet components and to the ultraviolet components of the spectrum, the spraying procedure must be performed away from ambient light. This can be obtained by means of a screening with a red plastic screen (not shown) provided with openings that allow the access and the inspection of the work zone.

Subsequently to the deposition of the layer of photo-sensitive resins, it is necessary to wait for the solvents present in the photoresist to evaporate. This operation is very important since the result affects the photographic characteristics of the material, and first of all its sensitivity.

Normally, both the operation of photoresist deposition and of evaporation of the solvent contained in it are performed in a laboratory, and therefore in an ambient with controlled temperature and humidity; more precisely, based on the data provided by the suppliers of photo-sensitive resins, the solvent evaporation requires the employment of ventilated type ovens kept at approximately 80 °C for 20 minutes.

Instead, having to operate directly in field, a method has been developed that is applicable in any temperature and humidity condition. This method provides, after the photoresist deposition as described above, repaired by the plexiglass protecting screen, for the wait, always under the protecting screen, for a sufficient time for the diluents in the photoresist to evaporate even in condition of ambient temperature and humidity.

Experimental testing showed that as a photoresist the product marketed with the name Shipley Microposit 1813 can be utilised advantageously, while as a diluent glycol diethylenicom dimethyl ether in proportion of 25 cc to 15 cc. After the spraying according to what described above of the diluted photoresist over surface of the component, there is expected to be a 12 to 24 hour wait at ambient temperature and humidity, under the plexiglass screen, for the evaporation of solvents.

It has been verified that variations in temperature and humidity, as well as in the time spent for the evaporation of solvents, produce slight variations in the photoresist sensitivity value; these variations require some adjustments in the exposure time. In order to determine the correct timing of the exposure is it possible to make a preliminary sample test on one portion of the measurement area with a jig of any geometric shape.

Upon completion of the photoresist solvents evaporation, the latter is ready to be exposed.

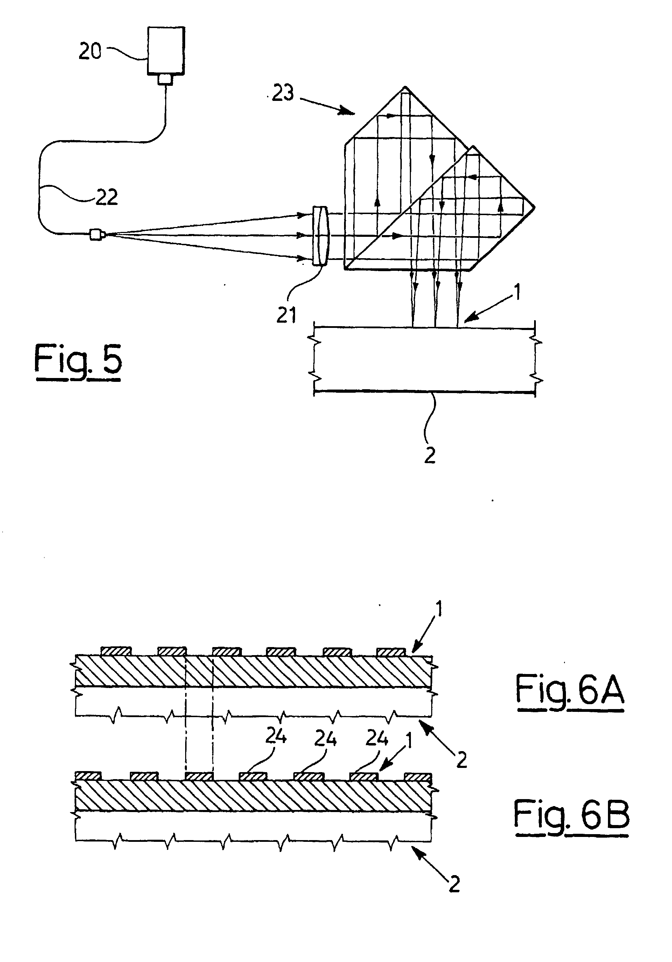

The exposure of photoresist is effected by means of an instrument also called "writing head", the optical scheme thereof is shown in principle in Figure 5.

The writing head, which comprises a basement 7 of the type shown in Figure 2, is laid on the component 2, the correct positioning being ensured by the engagement of the steel balls 4 in the V-shape seats 6 of the basement 7. The writing head comprises a laser source 20, preferably of the He-Cd type which produces light at a wavelength of 442 nm with a power of approximately 80 mW; the light produced by the laser 20 is conveyed to a collimator 21 (preferably having a diameter of approximately 50 mm) by means of an optical fibre 22, that allows to uncouple mechanically the laser source 20 from the writing head placed on the component 2. The writing head comprises also an assembly of prisms 23 that provides to splitting the light beam exiting the collimator 21 into two beams, and to recomposing the two beams thus obtained; the two light beams form a certain angle with each other, and interfere forming a grid of fringes of interference on the photoresist layer.

As known, when two beams of monochromatic light with a wavelength λ forming between them an angle 2ϑ interfere with each other, a grid of fringes of interference is formed, where the pitch P of the grid fringes is given by:

$$P = \lambda/(2\,\text{sen}\,\vartheta).$$

The assembly of prisms 23 is designed in such a way as to minimise volume (important aspect in that the equipment must be portable, having to function directly in field) and work distance form the component surface, in such a way as to minimise the influence of the ambient disturbances on the grid writing. The exposed area is preferably of 50x30 mm$^2$.

The grid formed by the fringes of interference exiting the writing head impresses the photoresist. It has been experimentally verified that, using the aforementioned material as a photoresist, diluted as described previously, the sensibility of photoresist in field is approximately equal to 200 mJ/cm$^2$, at the wavelength of the lights generated by the laser source (442 nm).

After the photoresist has been exposed to the light for a time of preferably 9 minutes after it exits the writing head, it must immediately be developed. In case the aforementioned material is employed as photoresist, as a development solution it is preferable to use the one known on the market with the name of Shipley Microposit 351 Developer, diluted with distilled water; the dilution that has been demonstrated to be optimal is the one providing for one part of developer solution for every five parts of distilled water. The developer solution, diluted in the aforementioned manner, is sprayed on the photoresist surface preferably for a time of 30 s. Subsequently, the photoresist is dried with clean air. At the end of these operations, as shown in Figure 6A, the photoresist surface will appear to be furrowed by parallel channels, interspaced with bands of photoresist, in correspondence of which channels the component metal surface (coated by the protective layer of nickel and rhodium) is left uncovered. The photoresist bands thus remained typically have a height of 1.5 μm and a width of 2.5 μm, and they extend over the entire area of measurement, while the channels where the photoresist has been removed also have a typical width of 2.5 μm.

The component is submitted once more to electro-nickelplating by means of the equipment in Figure 3, by applying to a portion of surface 1 the small tank 8. A layer of nickel is thus deposited on the channels furrowing the photoresist with an approximate thickness of 1.5 μm, that is a thickness equal to the height of the remaining photoresist bands.

The nickel plating tank is then removed from the component 2, and the remaining photoresist bands are dissolved by means of acetone. At the end of these operations, on the surface 1 of the component coated with the protecting nickel and rhodium layer a grid made of embossed nickel bands 24 is obtained.

In this way, directly on the surface of component whose deformations are to be measured, a nickel grid is formed, in such a way as to being integral with to the component itself, having the required pitch. This grid, for the very material that is made of, is capable of resisting high servicing plant temperatures, that can even be very high, and it is especially capable of following the deformations of the component itself, whether elastic or plastic, without introduction of intrinsic deformations that would affect measurement negatively.

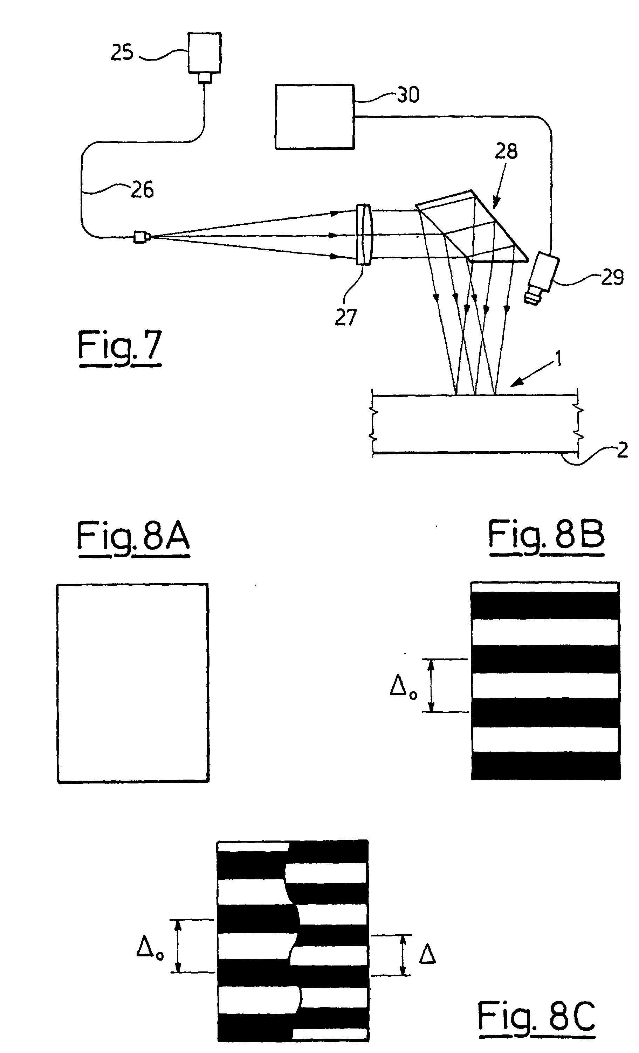

Once the grid is written on the component, the deformation measurements are taken by means of an instrument also called "reading head", the optical scheme thereof is shown in principle in Figure 7. This device comprises a laser source 25, and optical fibre 26 conveying a light generated by the laser 25 to a collimator 27, and an optical prism 28. The prism 28 splits the light beam exiting the collimator 27 into two beams forming a certain angle with respect to each other, and the two beams then recombine in correspondence of surface 1 of the component giving origin to fringes of interference that form a measurement grid to be compared to the nickel grid applied on the component.

The laser 25 can be for example of the type Nd-YAG duplicated in the green at the 532 nm wavelength; this laser is normally less voluminous, more compact and more suitable for the employment in field. The collimator 27 is identical to the one employed in the writing head, while the prism is designed and produced as a function of the wavelength of the laser 25, in such a way that the thus obtained measurement grid has a pitch that is half the pitch of the grid of nickel bands on the component. Halving the pitch of the measurement grid generated by the reading head allows to double measurement sensitivity. In addition, the prism 28 has a configuration such as to allow a variation in the pitch of the measurement grid following a rotation of the same prism 28 around the axis orthogonal to the plane of the drawing in Figure 7. The possibility to vary the pitch of the measurement grid allows to add, during the reading head calibration phase, some moiré fringes with a $\Delta_0$ offset pitch (Fig. 8B), which stand as a reference for the measurement of subsequent variations. This artifice serves the purpose to eliminate ambiguities in terms of sign relating to the formation of fringes from a field without any pre-existing fringes (Fig. 8), which corresponds to a condition of null deformation, and to allow to measure the pitch of moire fringes even in conditions where deformation gives rise to moiré fringes having a pitch value similar to the view range of the reading instrument, that would otherwise make it difficult to determine the value of the same pitch.

The reading head also comprises a CCD video camera 29 filming the image of the moiré fringes produced by the superimposition of the measurement grid to the nickel grid created on the component. The CCD video camera 29 is connected to a processor 30, for example a portable personal computer, that by means of a specific software processes the image taken by the CCD video camera 29 and calculates the value of the component deformation.

In order to compensate the effect produced by the variation of the ambient temperature between the instant of the grid writing and the instants of each subsequent reading, the software calculates the thermic deformation, knowing the thermic variation as measured by thermocouples and knowing the coefficient of the component dilatation α, consequently obtained during the grid writing, by means of the reading of the range of the moiré fringes at two different temperatures of the component, in a way as to obtain directly the specific value of the thermic dilatation coefficient to be employed in the calculation algorithm.

Figure 8C shows an example of moiré fringes with a pitch $\Delta$ as they are filmed by the CCD camera 29, compared with the moiré fringes with an offset pitch $\Delta_0$ memorised during the reading head calibration phase. The ratio (reported above) $\Delta = P/\varepsilon$ (where P is the pitch of the grid formed on the component) allows to obtain immediately the value of the deformation $\varepsilon$.

As an example, some numeric data relative to a deformation measurement are listed herein. If we suppose a pitch P on the component grid to be 2.5 $\mu$m, with a measuring range (that is grid dimension) of 50 mm, and three initial offset fringes corresponding to an offset pitch $\Delta_0$ equal to 16.66 mm, we obtain an offset value of $\varepsilon_0$ of 150 $\mu$strain that should be considered in computing the component deformation.

Estimating to be able to distinguish $\Delta$ pitch fringes of 15 mm, the corresponding value of $\varepsilon$ is 166 $\mu$strain, that by subtracting the offset 150 $\mu$strain, gives a minimum sensitivity of 16 $\mu$strain.

As concerns the measurement dynamics, estimating to be able to distinguish $\Delta$ pitch moiré fringes up to 0.5 mm, the corresponding value of $\varepsilon$ is 5.000 $\mu$strain, that, by subtracting the offset 150 $\mu$strain, gives a total dynamics of 4850 $\mu$strain.

**Claims**

1. Method for measuring a deformation of a plant component (2), the method comprising the following phases, all performed on the component directly in field:

buffing of a surface portion (1) of the component in order to remove surface oxide layers and to obtain a prescribed degree of roughness;
electro-deposition of a protective coating against oxidation on said buffed surface portion (1), said protective coating comprising a layer of nickel and a layer of rhodium;
deposition of a layer of photo-sensitive resins on said surface portion covered with the protective coating;
exposure of said layer of photo-sensitive resins to two interfering monochromatic light beams that generate on the surface thereof a first grid of fringes of interference having a first pitch (P) with a prescribed value;
development of the layer of photo-sensitive resins for the selective removal of the same in such a way as to obtain a periodic structure having said first pitch (P) and comprising a plurality of bands of photo-sensitive resins interspaced with channels where the protective coating of nickel and rhodium is left uncovered;
electro-deposition of nickel bands (24) in said channels between bands of photo-sensitive resins;
removal of the photo-sensitive resin bands in such a way as to obtain a grid, having said first pitch (P), formed by a plurality of nickel bands (24) embossed on said surface portion covered with the protective coating, so to provide a first periodic structure on said portion (1) of the said component surface (2);
generation of a second periodic structure with a second grid of fringes of interference on the same surface portion (1) of the component;
comparison of said first periodic structure with said second periodic reference structure for detecting the presence of moiré fringes of interference that are produced as a consequence of a dimensional variation of the first periodic structure on the component associated with a deformation of the component.

2. Method according to claim 1, **characterised in that** phase of said electro-deposition of a layer of protective coating comprises the electro-deposition on the buffed portion of surface (1) of a layer of nickel and the subsequent electro-deposition of a layer of rhodium on the nickel layer.

3. Method according to claim 2, **characterised in that** said layer of nickel has a thickness of approximately 30 $\mu$m.

4. Method according to claim 2, **characterised in that** said layer of rhodium has a thickness of approximately 2 $\mu$m.

5. Method according to claim 2, **characterised in that** said phase of electro-deposition of the nickel layer includes the application on the component (2), in correspondence of said portion of buffed surface (1), of a small tank (8) in which a nickel electrode (9) is inserted and connected to the positive pole of a power supply (10), while the negative pole of the power supply (10) is connected to the component (2), and the circulation of a solution containing nickel between the small tank (8) and a main tank (13) in which the solution containing nickel is maintained at a prescribed temperature.

6. Method according to claim 5, **characterised in that** said circulation of the solution containing nickel includes a filtering of the solution itself.

7. Method according to claim 2, **characterised in that** said electro-deposition phase of the rhodium layer includes the application to the component (2), in correspondence of said portion of buffed surface (1) on which the nickel layer has been electro-deposited, of a small tank (8) in which a nickel electrode (9) is inserted and connected to the positive pole of a power supply (10), while the negative pole of the power supply (10) is connected to the component, said small tank containing a solution including rhodium that is maintained at ambient temperature.

8. Method according to claim 1, **characterised in that** the deposition on the surface portion (1) of the photo-sensitive resins layer is carried out by means of spraying with an aerograph (15).

9. Method according to claim 8, **characterised in that** said aerograph is mobile along a motorised guide.

10. Method according to claim 8, **characterised in that** during the deposition of the photo-sensitive resins layer, the surface portion (1) of the component is protected with a screen to eliminate the electromagnetic spectrum components impressing the photo-sensitive resins.

11. Method according to claim 10, **characterised in that** subsequently to the phase of deposition of the photo-sensitive resins layer there is a phase for the evaporation of the solvents found in the photo-sensitive layer.

12. Method according to claim 11, **characterised in that** said phase for the evaporation of the solvents found in the photo-sensitive resins layer provides for waiting for a prescribed time at ambient conditions maintaining the photo-sensitive resins layer protected by said screen.

13. Method according to claim 12, **characterised in that** said prescribed wait period is a time comprised between 12 and 24 hours.

14. Method according to claim 1, **characterised in that** the exposure of the photo-sensitive resins coating is effected by means of a portable writing head that is placed on the component (2) in correspondence of said surface portion (1), said writing head comprising a laser source (20), means for conveying the light with optical fibre (22) for transmitting the light generated by the laser source (20) to a collimator (21) and to a assembly of prisms (23) exiting said collimator in order to split a light beam exiting the collimator (21) into two beams forming a prescribed angle with each other and interfering at the surface of said layer of photo-sensitive resins.

15. Method according to claim 14, **characterised in that** said laser source (20) is of the He-Cd type.

16. Method according to claim 14, **characterised in that** on said component (2), in correspondence of said surface portion (1), there are applied first positioning means (4) co-operating with second positioning means (6) associated with said writing head, said first and second positioning means co-operating to allow the automatic positioning of the component writing head.

17. Method according to claim 16, **characterised in that** said first positioning means are made of steel balls (4) welded on the surface of the component (2), and said second positioning means are made of corresponding V-shape seats suitable to accommodate said balls (4).

18. Method according to claim 17, **characterised in that** said balls (4) are three in number.

19. Method according to claim 18, **characterised in that** said comparison of the first periodic structure on the component (2) with the second reference periodic structure is effected by means of a portable reading head that is placed on the component in correspondence of said surface portion (1), said reading head comprising a second laser source (25), light conveyor means of optical fibre (26) for conveying the light generated by the laser source to a collimator (27), and an optical prism (28) exiting the collimator that provides to splitting a light beam exiting the collimator into two beams forming a prescribed angle with respect to each other, and interfering in correspondence of the surface portion (1) of the component, in such a way as to generate an interference grid having a second prescribed pitch (P/2) that is a submultiple of said first pitch (P).

20. Method according to claim 19, **characterised in that** said second laser source (25) is of the type Nd-YAG.

21. Method according to claim 19, **characterised in that** said reading head comprises third positioning means, made of V-shaped seats, in which said steel balls are engaged for the automatic positioning of the reading head on the component (2).

22. Method according to claim 21, **characterised in that** said reading head comprises a video camera (29) for filming the image generated by the superimposition of the interference grid generated by the reading head at the first periodic structure found on the component (2), said video camera being connected to a portable processor (30).

23. Method according to claim 22, **characterised in that** it provides for a phase for the calibration of the reading head in which phase at the exit of the read-

**EP 0 843 157 B1**

ing head an interference grid is formed, having a third pitch that is not a submultiple of said first pitch (P), so that by the superimposition of said interference grid to the first periodic structure formed on the component (2) there is created an image comprising a plurality of moiré fringes having an offset pitch ($\Delta_0$).

24. Method according to claim 22, **characterised in that** said image is filmed by the video camera (29) and memorised in the processor (30) as a reference image.

25. Apparatus for the measurement of a deformation of a plant component (2) directly in field, the apparatus comprising:

an assembly of portable instruments for forming, directly in field, a first periodic structure having a first prescribed pitch (P) on a plant component (2); and
a portable reading instrument for generating a second periodic structure having a second prescribed pitch (P/2), that is a sub-multiple of said first pitch (P), for comparing said second periodic structure with the first periodic structure and for elaborating an image containing moiré fringes of interference generated by the superimposition of the second periodic structure to the first periodic structure, once the first periodic structure has undergone a pitch variation as a consequence of a deformation of the component (2);
said assembly of portable instruments including:

means for electro-deposition of a protective coating against oxidation on a buffed surface portion (1) of the component (2), said protective coating comprising a layer of nickel and a layer of rhodium;
means for deposition of a layer of photo-sensitive resins on said surface portion covered with the protective coating;
means for exposure of said layer of photo-sensitive resins to two interfering monochromatic light beams that generate on the surface thereof a first grid of fringes of interference having a first pitch (P) with a prescribed value;
means for development of the layer of photo-sensitive resins for the selective removal of the same in such a way as to obtain a periodic structure having said first pitch (P) and comprising a plurality of bands of photo-sensitive resins interspaced with channels where the protective coating is left uncovered;

means for electro-deposition of nickel bands (24) in said channels between bands of photo-sensitive resins;
means for removal of the photo-sensitive resin bands in such a way as to obtain a grid, having said first pitch (P), formed by a plurality of nickel bands (24) embossed on said surface portion covered with the protective coating, so to provide a first periodic structure on said portion (1) of the said component surface (2);
said portable reading instrument including:

means for generating a second periodic structure with a second grid of fringes of interference on the same surface portion (1) of the component and comparing said second periodic structure with said first periodic structure for detecting the presence of moiré fringes of interference that are produced as a consequence of a dimensional variation of the first periodic structure on the component associated with a deformation of the component.

26. Apparatus according to claim 25, **characterised in that** said assembly of portable instruments comprises:

a first portable equipment including said means for the electro-deposition of layers of material on said surface portion (1) of the component (2) on which the first periodic structure must be formed;
a second portable equipment including said means for the deposition of a layer of photo-sensitive resins;
a portable writing head for generating a first image containing said first grid of fringes of interference having a first prescribed pitch (P) to impress said photo-sensitive resins layer.

27. Apparatus according to claim 26, **characterised in that** said first portable equipment comprises a small tank (8) to be applied on the component (2) and in which is immersed an electrode (9) that is made of the material of the layer that is to be deposited on the component surface, said electrode being connected to a positive pole of a power supply (10) whose negative pole is connected to the component, a main tank (13) containing a solution, means for recirculation (11, 14) to allow the recirculation of the solution between the main tank and the small tank applied to the component, means for filtering (12) interspaced between the main tank and the small tank applied to the component, and means for thermostating connected to said main tank to maintain the solution at a prescribed temperature.

28. Apparatus according to claim 26, **characterised in that** said second portable equipment comprises an aerograph (15) mobile along a motorised guide (16, 17) that is applicable to the component in order to spray on the surface portion (1) of the component a photo-sensitive resins, and screening means to screen said portion of surface from electromagnetic spectrum component suitable to impress the photo-sensitive resins.

29. Apparatus according to claim 26, **characterised in that** said writing head comprises a first source of laser light (20), light conveyor means of optic fibre (22) to convey the light generated by the laser source (20) to a collimator (21) and an assembly of optical prisms (23) exiting said collimator serving the purpose to split a light beam exiting the collimator into two beams forming with respect to each other a prescribed angle and interfering in correspondence, of said layer of photo-sensitive resins.

30. Apparatus according to claim 29, **characterised in that** said first laser source (20) is of the type He-Cd.

31. Apparatus according to claim 25, **characterised in that** said reading instrument comprises a reading head to be applied to the component (2) in correspondence of said surface portion (1), said reading head comprising a second laser source (25), light conveyor optic fibre means (26) for conveying the light generated by the laser source to a collimator (27), and a first optical prism (28) exiting said collimator which provides to split a beam of light exiting the collimator into two beams forming a prescribed angle with respect to each other and interfering in correspondence of the surface portion (1) of the component, in a way to generate a second periodic structure with a second grid of fringes of interference having a second prescribed pitch (P/2) that is a submultiple of said first pitch (P), the reading head also including a video camera (29) for taking the image of moiré fringes produced by the superimposition of the second grid of fringes of interference onto the first grid and a processor (30) for processing the image taken by the video camera (29) and calculating the value of the component deformation according to said image.

32. Apparatus according to claim 26, **characterized in that** said portable writing head comprises:

said means for exposure of said layer of photo-sensitive resins to two interfering monochromatic light beams that generate on the surface thereof a first grid of fringes of interference having a first pitch (P);

means for development of the layer of photo-sensitive resins for the selective removal of the same in such a way as to obtain a first periodic structure having said first pitch (P) and comprising a plurality of bands of photo-sensitive resins interspaced with channels where the protective coating is left uncovered.

## Patentansprüche

1. Verfahren zum Messen einer Deformation einer Anlagenkomponente (2),
wobei das Verfahren die folgenden Phasen aufweist, die alle direkt an Ort und Stelle bei der Komponente durchgeführt werden:

Polieren eines Oberflächenabschnitts (1) der Komponente, um Oberflächen-Oxidschichten zu entfernen und um ein vorgeschriebenes Rauhigkeitsmaß zu erhalten;
eine Elektro-Ablagerung eines Schutzüberzugs gegen eine Oxidation auf dem polierten Oberflächenabschnitt (1), wobei der Schutzüberzug eine Schicht aus Nickel und eine Schicht aus Rhodium aufweist;
eine Ablagerung einer Schicht aus fotoempfindlichen Harzen auf dem mit dem Schutzüberzug bedeckten Oberflächenabschnitt;
eine Freilegung der Schicht aus fotoempfindlichen Harzen gegenüber zwei interferierenden monochromatischen Lichtstrahlen, die auf ihrer Oberfläche ein erstes Gitter aus Rändern einer Interferenz mit einem ersten Abstand (P) mit einem vorgeschriebenen Wert erzeugen;
eine Entwicklung der Schicht aus fotoempfindlichen Harzen für die selektive Entfernung derselben auf derartige Weise, dass eine periodische Struktur mit dem ersten Abstand (P) und mit einer Vielzahl von Bändern aus fotoempfindlichen Harzen erhalten wird, die mit Kanälen dazwischen beabstandet sind, bei welchen der Schutzüberzug aus Nickel und Rhodium unbedeckt gelassen ist;
eine Elektro-Ablagerung von Nickelbändern (24) in den Kanälen zwischen Bändern aus fotoempfindlichen Harzen;
eine Entfernung der fotoempfindlichen Harzbänder auf derartige Weise, dass ein Gitter mit dem ersten Abstand (P) erhalten wird, das durch eine Vielzahl von Nikkelbändern (24) gebildet ist, die am Oberflächenabschnitt hervorstehend sind, der mit dem Schutzüberzug bedeckt ist, um eine erste periodische Struktur auf dem Abschnitt (1) der Komponentenoberfläche (2) zur Verfügung zu stellen;
eine Erzeugung einer zweiten periodischen Struktur mit einem zweiten Gitter aus Rändern einer Interferenz auf demselben Oberflächenabschnitt (1) der Komponente;
einen Vergleich der ersten periodischen Struktur mit der zweiten periodischen Referenzstruktur zum Erfassen des Vorhandenseins von Moiré-Rändern einer Interferenz, die als Folge einer dimensionsmäßigen Variation der ersten periodischen Struktur an der Komponente erzeugt werden, die zu einer Deformierung der Komponente gehört.

2. Verfahren nach Anspruch 1, **dadurch gekennzeichnet, dass** eine Phase der Elektro-Ablagerung einer Schicht eines Schutzüberzugs die Elektro-Ablagerung einer Schicht aus Nickel auf dem polierten Abschnitt der Oberfläche (1) und die darauffolgende Elektro-Ablagerung einer Schicht aus Rhodium auf der Nickelschicht aufweist.

3. Verfahren nach Anspruch 2, **dadurch gekennzeichnet, dass** die Schicht aus Nickel eine Dicke von etwa 30 µm hat.

4. Verfahren nach Anspruch 2, **dadurch gekennzeichnet, dass** die Schicht aus Rhodium eine Dikke von etwa 2 µm hat.

5. Verfahren nach Anspruch 2, **dadurch gekennzeichnet, dass** die Phase der Elektro-Ablagerung der Nickelschicht das Anlegen an der Komponente (2) entsprechend dem Abschnitt einer polierten Oberfläche (1) eines kleinen Tanks (8) enthält, in welchem eine Nickelelektrode (9) eingefügt ist und der an den positiven Pol einer Leistungsversorgung (10) angeschlossen ist, während der negative Pol der Leistungsversorgung (10) an die Komponente (2) angeschlossen ist, und die Zirkulation einer Lösung, die Nickel enthält, zwischen dem kleinen Tank (8) und einem Haupttank (13), in welchem die Lösung, die Nickel enthält, auf einer vorgeschriebenen Temperatur gehalten wird.

6. Verfahren nach Anspruch 5, **dadurch gekennzeichnet, dass** die Zirkulation der Lösung, die Nickel enthält, ein Filtern der Lösung selbst enthält.

7. Verfahren nach Anspruch 2, **dadurch gekennzeichnet, dass** die Elektro-Ablagerungsphase der Rhodiumschicht das Anlegen an die Komponente (2) entsprechend dem Abschnitt der polierten Oberfläche (1), auf welchem eine Elektro-Ablagerung der Nickelschicht durchgeführt worden ist, eines kleinen Tanks (8) enthält, in welchen eine Nickelelektrode (9) eingeführt ist und die am positiven Pol einer Leistungsversorgung (10) angeschlossen ist, während der negative Pol der Leistungsversorgung (10) an die Komponente angeschlossen ist, wobei der kleine Tank, der eine Lösung enthält, die Rhodium enthält, das auf einer Umgebungstemperatur gehalten wird.

8. Verfahren nach Anspruch 1, **dadurch gekennzeichnet, dass** die Ablagerung auf dem Oberflächenabschnitt (1) der fotoempfindlichen Harzschicht mittels eines Sprühens mit einem Aerograph (15) ausgeführt wird.

9. Verfahren nach Anspruch 8, **dadurch gekennzeichnet, dass** der Aerograph entlang einer motorisierten Führung beweglich ist.

10. Verfahren nach Anspruch 8, **dadurch gekennzeichnet, dass** während der Ablagerung der fotoempfindlichen Harzschicht der Oberflächenabschnitt (1) der Komponente mit einer Abschirmung geschützt wird, um die Komponenten des elektromagnetischen Spektrums zu eliminieren, die die fotoempfindlichen Harze einprägen.

11. Verfahren nach Anspruch 10, **dadurch gekennzeichnet, dass** es nach der Phase einer Ablagerung der fotoempfindlichen Harzschicht eine Phase für die Verdampfung der Lösungsmittel gibt, die in der fotoempfindlichen Schicht gefunden werden.

12. Verfahren nach Anspruch 11, **dadurch gekennzeichnet, dass** die Phase für die Verdampfung der Lösungsmittel, die in der fotoempfindlichen Harzschicht gefunden werden, für ein Warten für eine vorbestimmte Zeit bei Umgebungsbedingungen sorgt, während die fotoempfindliche Harzschicht durch die Abschirmung geschützt gehalten wird.

13. Verfahren nach Anspruch 12, **dadurch gekennzeichnet, dass** die vorgeschriebene Warteperiode eine Zeit zwischen 12 und 24 Stunden ist.

14. Verfahren nach Anspruch 1, **dadurch gekennzeichnet, dass** die Belichtung des fotoempfindlichen Harzüberzugs mittels eines portierbaren Schreibkopfes bewirkt wird, der entsprechend dem Oberflächenabschnitt (1) an der Komponente (2) angeordnet wird, wobei der Schreibkopf eine Laserquelle (20) aufweist, eine Einrichtung zum Befördern bzw. Weiterleiten des Lichts mit einer optischen Faser (22) zum Übertragen des durch die Laserquelle (20) erzeugten Lichts zu einem Kollimator (21) und zu einer Anordnung von Prismen (23) am Ausgang des Kollimators, um einen aus dem Kollimator (21) austretenden Lichtstrahl unter Ausbildung eines vorgeschriebenen Winkels zueinander und unter einem Interferieren an der Oberfläche der Schicht aus fotoempfindlichen Harzen in zwei Strahlen aufzuteilen.

15. Verfahren nach Anspruch 14, **dadurch gekenn-**

**zeichnet, dass** die Laserquelle (20) vom He-Cd-Typ ist.

16. Verfahren nach Anspruch 14, **dadurch gekennzeichnet, dass** es auf der Komponente (2) entsprechend dem Oberflächenabschnitt (1) eine angewendete erste Positioniereinrichtung (4) gibt, die mit einer zweiten Positioniereinrichtung (6) zusammenarbeitet, die zum Schreibkopf gehört, wobei die erste und die zweite Positioniereinrichtung zusammenarbeiten, um die automatische Positionierung des Komponenten-Schreibkopfes zuzulassen.

17. Verfahren nach Anspruch 16, **dadurch gekennzeichnet, dass** die erste Positioniereinrichtung aus Stahlkugeln (4) hergestellt ist, die an die Oberfläche der Komponente (2) geschweißt sind, und die zweite Positioniereinrichtung aus entsprechenden V-förmigen Sitzen hergestellt ist, die zum Unterbringen der Kugeln (4) geeignet sind.

18. Verfahren nach Anspruch 17, **dadurch gekennzeichnet, dass** die Anzahl der Kugeln (4) drei ist.

19. Verfahren nach Anspruch 18, **dadurch gekennzeichnet, dass** der Vergleich der ersten periodischen Struktur an der Komponente (2) mit der zweiten periodischen Referenzstruktur mittels eines portierbaren Lesekopfes bewirkt wird, der auf der Komponente entsprechend dem Oberflächenabschnitt (1) angeordnet wird, wobei der Lesekopf eine zweite Laserquelle (25) aufweist, eine Licht-Weiterleitungseinrichtung einer optischen Faser (26) zum Befördern bzw. Weiterleiten des durch die Laserquelle erzeugten Lichts zu einem Kollimator (27), und ein optisches Prisma (28) am Ausgang des Kollimators, das für ein Aufteilen eines Lichtstrahls, der aus dem Kollimator austritt, in zwei Strahlen sorgt, die einen vorgeschriebenen Winkel zueinander bilden und die entsprechend dem Oberflächenabschnitt (1) der Komponente interferieren, und zwar auf eine solche Weise, dass ein Interferenzgitter mit einem zweiten vorgeschriebenen Abstand (P/2) erzeugt wird, der ein Untervielfaches des ersten Abstands (P) ist.

20. Verfahren nach Anspruch 19, **dadurch gekennzeichnet, dass** die zweite Laserquelle (25) vom Typ Nd-YAG ist.

21. Verfahren nach Anspruch 19, **dadurch gekennzeichnet, dass** der Lesekopf eine dritte Positioniereinrichtung aufweist, die aus V-förmigen Sitzen hergestellt ist, wobei die Stahlkugeln für die automatische Positionierung des Lesekopfs an der Komponente (2) eingesetzt werden.

22. Verfahren nach Anspruch 21, **dadurch gekenn-**

**zeichnet, dass** der Lesekopf eine Videokamera (29) zum Filmen des Bildes aufweist, das durch die Überlagerung des Interferenzgitters erzeugt wird, das durch den Lesekopf bei der ersten periodischen Struktur erzeugt wird, die auf der Komponente (2) gefunden wird, wobei die Videokamera an einen portierbaren Prozessor (30) angeschlossen ist.

23. Verfahren nach Anspruch 22, **dadurch gekennzeichnet, dass** es für eine Phase für die Kalibrierung des Lesekopfes sorgt, in welcher Phase am Ausgang des Lesekopfs ein Interferenzgitter ausgebildet wird, das einen dritten Abstand hat, der kein Untervielfaches des ersten Abstands (P) ist, so dass durch die Überlagerung des Interferenzgitters mit der ersten periodischen Struktur, die an der Komponente (2) ausgebildet ist, ein Bild mit einer Vielzahl von Moiré-Rändern mit einem Offset-Abstand ($\Delta_0$) erzeugt wird.

24. Verfahren nach Anspruch 22, **dadurch gekennzeichnet, dass** das Bild durch die Videokamera (29) gefilmt wird und im Prozessor (30) als Referenzbild gespeichert wird.

25. Vorrichtung zum Messen einer Deformierung einer Anlagenkomponente (2) direkt an Ort und Stelle, wobei die Vorrichtung folgendes aufweist:

eine Anordnung von portierbaren Instrumenten zum Bilden, direkt an Ort und Stelle, einer ersten periodischen Struktur mit einem ersten vorgeschriebenen Abstand (P) an einer Anlagenkomponente (2); und
ein portierbares Leseinstrument zum Erzeugen einer zweiten periodischen Struktur mit einem zweiten vorgeschriebenen Abstand (P/2), die ein Untervielfaches des ersten Abstands (P) ist, zum Vergleichen der zweiten periodischen Struktur mit der ersten periodischen Struktur und zum Ausarbeiten eines Bildes mit Moiré-Rändern einer Interferenz, das durch die Überlagerung der zweiten periodischen Struktur mit der ersten periodischen Struktur erzeugt wird, wenn sich die erste periodische Struktur einmal einer Abstandsvariation als Folge einer Deformierung der Komponente (2) unterzogen hat;

wobei die Anordnung von portierbaren Instrumenten folgendes enthält:

eine Einrichtung zur Elektro-Ablagerung eines Schutzüberzugs gegen eine Oxidation auf einem polierten Oberflächenabschnitt (1) der Komponente (2), wobei der Schutzüberzug eine Schicht aus Nickel und eine Schicht aus Rhodium aufweist;
eine Einrichtung zur Ablagerung einer Schicht aus fotoempfindlichen Harzen auf dem Oberflächenabschnitt, der mit dem Schutzüberzug bedeckt ist;

eine Einrichtung zur Freilegung der Schicht aus fotoempfindlichen Harzen gegenüber zwei interferierenden monochromatischen Lichtstrahlen, die auf ihrer Oberfläche ein erstes Gitter von Rändern einer Interferenz mit einem ersten Abstand (P) mit einem vorgeschriebenen Wert erzeugen;

eine Einrichtung zur Entwicklung der Schicht aus fotoempfindlichen Harzen für die selektive Entfernung derselben auf eine derartige Weise, um eine periodische Struktur mit dem ersten Abstand (P) und mit einer Vielzahl von Bändern von fotoempfindlichen Harzen zu erhalten, die durch Kanäle beabstandet sind, wobei der Schutzüberzug unbedeckt gelassen wird;

eine Einrichtung zur Elektro-Ablagerung von Nickelbändern (24) in den Kanälen zwischen Bändern von fotoempfindlichen Harzen;

eine Einrichtung zur Entfernung der fotoempfindlichen Harzbänder auf derartige Weise, dass ein Gitter mit dem ersten Abstand (P) erhalten wird, das durch eine Vielzahl von Nickelbändern (24) gebildet wird, die am Oberflächenabschnitt vorstehen, der mit dem Schutzüberzug bedeckt ist, um eine erste periodische Struktur des Abschnitts (1) der Komponentenoberfläche (2) zur Verfügung zu stellen;

wobei das portierbare Leseinstrument folgendes enthält:

eine Einrichtung zum Erzeugen einer zweiten periodischen Struktur mit einem zweiten Gitter von Rändern einer Interferenz auf demselben Oberflächenabschnitt (1) der Komponente und zum Vergleichen der zweiten periodischen Struktur mit der ersten periodischen Struktur, um das Vorhandensein von Moiré-Rändern einer Interferenz zu erfassen, die als Folge einer dimensionsmäßigen Veränderung bzw. Variation der ersten periodischen Struktur auf der Komponente erzeugt werden, die zu einer Deformierung der Komponente gehört.

26. Vorrichtung nach Anspruch 25, **dadurch gekennzeichnet, dass** die Anordnung von portierbaren Instrumenten folgendes aufweist:

eine erste portierbare Ausrüstung mit der Einrichtung für die Elektro-Ablagerung von Schichten eines Materials auf dem Oberflächenabschnitt (1) der Komponente (2), auf welchem die erste periodische Struktur ausgebildet werden muss;

ein zweites portierbares Gerät, das die Einrichtung für die Ablagerung einer Schicht aus fotoempfindlichen Harzen enthält;

einen portierbaren Schreibkopf zum Erzeugen eines ersten Bildes, das das erste Gitter aus Rändern einer Interferenz mit einem ersten vorgeschriebenen Abstand (P) enthält, um die fotoempfindliche Harzschicht einzuprägen.

27. Vorrichtung nach Anspruch 26, **dadurch gekennzeichnet, dass** das erste portierbare Gerät einen kleinen Tank (8) aufweist, um an die Komponente (2) angelegt zu werden, in welchen eine Elektrode (9) eingetaucht wird, die aus dem Material der Schicht hergestellt ist, das auf die Komponentenoberfläche abzulagern ist, wobei die Elektrode an einen positiven Pol einer Leistungsversorgung (10) angeschlossen wird, deren negativer Pol an die Komponente angeschlossen ist, wobei ein Haupttank (13) eine Lösung enthält; eine Einrichtung zur erneuten Zirkulation bzw. Rückzirkulation (11, 14), um die erneute Zirkulation bzw. Rückzirkulation der Lösung zwischen dem Haupttank und dem kleinen Tank, der an die Komponente angelegt ist, zuzulassen; eine Einrichtung zur Filterung (12), die mit einem Abstand zwischen dem Haupttank und dem kleinen Tank, der an die Komponente angelegt ist, angeordnet ist; und eine Einrichtung zur Thermoeinstellung, welche Einrichtung an den Haupttank angeschlossen ist, um die Lösung auf einer vorgeschriebenen Temperatur zu halten.

28. Vorrichtung nach Anspruch 26, **dadurch gekennzeichnet, dass** das zweite portierbare Gerät einen Aerograph (15) aufweist, der entlang einer motorisierten Führung (16, 17) beweglich ist und der auf die Komponente anwendbar ist, um auf den Oberflächenabschnitt (1) der Komponente ein fotoempfindliches Harz zu sprühen, und eine Abschirmeinrichtung zum Abschirmen des Abschnitts der Oberfläche gegenüber einer Komponente des elektromagnetischen Spektrums, die zum Einprägen der fotoempfindlichen Harze geeignet ist.

29. Vorrichtung nach Anspruch 26, **dadurch gekennzeichnet, dass** der Schreibkopf eine erste Quelle eines Laserlichts (20) aufweist, eine Licht-Weiterleitungseinrichtung einer optischen Faser (22) zum Weiterleiten bzw. Befördern des durch die Laserquelle (20) erzeugten Lichts zu einem Kollimator (21) und eine Anordnung von optischen Prismen (23) am Ausgang des Kollimators, die dem Zweck dienen, einen aus dem Kollimator austretenden Lichtstrahls in zwei Strahlen aufzuteilen, die zueinander einen vorgeschriebenen Winkel bilden und die entsprechend der Schicht von fotoempfindlichen Harzen interferieren.

30. Vorrichtung nach Anspruch 29, **dadurch gekenn-**

**zeichnet, dass** die erste Laserquelle (20) vom Typ He-Cd ist.

**31.** Vorrichtung nach Anspruch 25, **dadurch gekennzeichnet, dass** das Leseinstrument einen Lesekopf aufweist, der entsprechend dem Oberflächenabschnitt (1) an die Komponente (2) anzulegen ist, wobei der Lesekopf eine zweite Laserquelle (25) aufweist, eine optische Lichtweiterleitungs-Fasereinrichtung (26) zum Weiterleiten bzw. Befördern des durch die Laserquelle erzeugten Lichts zu einem Kollimator (27), und ein erstes optisches Prisma (28) am Ausgang des Kollimators, das für ein Aufteilen eines Lichtstrahls am Ausgang des Kollimators in zwei Strahlen sorgt, die einen vorgeschriebenen Winkel zueinander bilden und die entsprechend dem Oberflächenabschnitt (1) der Komponente interferieren, auf eine derartige Weise, dass die zweite periodische Struktur mit einem zweiten Gitter von Rändern einer Interferenz mit einem zweiten vorgeschriebenen Abstand (P/2) erzeugt wird, der ein Untervielfaches des ersten Abstands (P) ist, wobei der Lesekopf auch eine Videokamera (29) zum Aufnehmen des Bildes von Moiré-Rändern enthält, die durch die Überlagerung des zweiten Gitters von Rändern einer Interferenz auf das erste Gitter erzeugt werden, und einen Prozessor (30), zum Verarbeiten des durch die Videokamera (29) aufgenommenen Bildes und zum Berechnen des Werts der Komponentendeformierung gemäß dem Bild.

**32.** Vorrichtung nach Anspruch 26, **dadurch gekennzeichnet, dass** der portierbare Schreibkopf folgendes aufweist:

die Einrichtung zur Freilegung der Schicht auf fotoempfindlichen Harzen gegenüber zwei interferierenden monochromatischen Lichtstrahlen, die auf der Oberfläche davon ein erstes Gitter von Rändern einer Interferenz mit einem ersten Abstand (P) erzeugen;
eine Einrichtung zur Entwicklung der Schicht aus fotoempfindlichen Harzen für die selektive Entfernung derselben auf derartige Weise, dass eine erste periodische Struktur mit dem ersten Abstand (P) und mit einer Vielzahl von Bändern aus fotoempfindlichen Harzen erhalten wird, die durch Kanäle dazwischen voneinander beabstandet sind, wobei der Schutzüberzug unbedeckt gelassen ist.

## Revendications

**1.** Procédé pour mesurer une déformation d'un composant (2) d'une installation, le procédé comprenant les phases suivantes, toutes exécutées sur le composant et directement sur site :

on polit une partie de surface (1) du composant afin d'enlever les couches d'oxyde de surface et d'obtenir un degré de rugosité prescrit ;
on dépose par voie électrolytique un revêtement protecteur à l'encontre de l'oxydation sur ladite partie de surface polie (1), ledit revêtement protecteur comprenant une couche de nickel et une couche de rhodium ;
on dépose une couche de résine photosensible sur ladite partie de surface couverte avec le revêtement protecteur ;
on expose ladite couche de résine photosensible à deux faisceaux lumineux monochromatiques en interférence qui engendrent sur la surface de cette couche un premier réseau de franges d'interférences ayant un premier pas (P) avec une valeur prescrite ;
on développe la couche de résine photosensible pour enlèvement sélectif de celle-ci de telle manière que l'on obtient une structure périodique ayant ledit pas (P) et comprenant une pluralité de bandes de résine photosensible espacées avec des canaux dans lesquels le revêtement protecteur de nickel et de rhodium est laissé sans être couvert ;
on dépose par voie électrolytique des bandes de nickel (24) dans lesdits canaux entre des bandes de résine photosensible ;
on enlève les bandes de résine photosensible de telle manière que l'on obtient une grille, présentant ledit premier pas (P), formée par une pluralité de bandes de nickel (24), empreintes sur ladite partie de surface couverte avec le revêtement protecteur, de façon à réaliser une première structure périodique sur ladite partie (1) de la surface (2) dudit composant ;
on engendre une deuxième structure périodique avec un deuxième réseau de franges d'interférences sur la même partie de surface (1) du composant ;
on compare ladite première structure périodique avec ladite deuxième structure de référence périodique afin de détecter la présence de franges d'interférences de moiré qui sont produites à titre de conséquence d'une variation dimensionnelle de la première structure périodique sur le composant, associée à une déformation du composant.

**2.** Ptocédé selon la revendication 1, **caractérisé en ce que** cette phase de déposition électrolytique d'une couche de revêtement protecteur comprend la déposition électrolytique sur la partie polie de la surface (1), d'une couche de nickel, et la déposition électrolytique ultérieure d'une couche de rhodium sur la couche de nickel.

3. Procédé selon la revendication 2, **caractérisé en ce que** ladite couche de nickel a une épaisseur d'approximativement 30 microns.

4. Procédé selon la revendication 2, **caractérisé en ce que** ladite couche de rhodium a une épaisseur d'approximativement 2 microns.

5. Procédé selon la revendication 2, **caractérisé en ce que** ladite phase de déposition électrolytique de la couche de nickel inclut l'application sur le composant (2), en correspondance de ladite partie de surface polie (1), d'un petit réservoir (8) dans lequel est introduite une électrode de nickel (9) et qui est connecté au pôle positif d'une alimentation de puissance (10), tandis que le pôle négatif de l'alimentation de puissance (10) est connecté au composant (2), et la mise en circulation d'une solution contenant du nickel entre le petit réservoir (8) et un réservoir principal (13) dans lequel la solution contenant du nickel est maintenue à une température prescrite.

6. Procédé selon la revendication 5, **caractérisé en ce que** ladite mise en circulation de la solution contenant du nickel inclut un filtrage de la solution elle-même.

7. Procédé selon la revendication 2, **caractérisé en ce que** ladite phase de déposition électrolytique de la couche de rhodium inclut l'application sur le composant (2), en correspondance de ladite partie de surface polie (1) sur laquelle la couche de nickel a été déposée par voie électrolytique, d'un petit réservoir (8) dans lequel est introduite une électrode de nickel (9) et qui est connecté au pôle positif d'une alimentation de puissance (10), tandis que le pôle négatif de l'alimentation de puissance (10) est connecté au composant, ledit petit réservoir contenant une solution qui inclut du rhodium maintenu à température ambiante.

8. Procédé selon la revendication 1, **caractérisé en ce que** la déposition sur la partie de surface (1) de la couche de résine photosensible est effectuée au moyen d'une pulvérisation avec un aérographe (15).

9. Procédé selon la revendication 8, **caractérisé en ce que** ledit aérographe est mobile le long d'un guide motorisé.

10. Procédé selon la revendication 8, **caractérisé en ce que** pendant la déposition de la couche de résine photosensible, la partie de surface (1) du composant est protégée avec un écran pour éliminer les composantes du spectre électromagnétique qui impressionnent les résines photosensibles.

11. Procédé selon la revendication 10, **caractérisé en ce que**, successivement à la phase de déposition de la couche de résine photosensible, il est prévu une phase pour l'évaporation des solvants qui se trouvent dans la couche photosensible.

12. Procédé selon la revendication 11, **caractérisé en ce que** ladite phase pour l'évaporation des solvants qui se trouvent dans la couche de résine photosensible prévoit d'attendre un temps prescrit sous des conditions ambiantes en maintenant la couche de résine photosensible protégée par ledit écran.

13. Procédé selon la revendication 12, **caractérisé en ce que** ladite période d'attente prescrite est une durée comprise entre 12 et 24 heures.

14. Procédé selon la revendication 1, **caractérisé en ce que** l'exposition du revêtement de résine photosensible est effectuée au moyen d'une tête d'écriture portative qui est placée sur le composant (2) en correspondance de ladite partie de surface (1), ladite tête d'écriture comprenant une source laser (20), des moyens pour transporter la lumière avec une fibre optique (22) pour transmettre la lumière produite par la source laser (20) vers un collimateur (21) et vers un ensemble de prismes (23) à la sortie dudit collimateur, afin de scinder un faisceau lumineux qui sort du collimateur (21) en deux faisceaux formant un angle prescrit l'un avec l'autre et interférant au niveau de la surface de ladite couche de résine photosensible.

15. Procédé selon la revendication 14, **caractérisé en ce que** ladite source laser (20) est du type He-Cd.

16. Procédé selon la revendication 14, **caractérisé en ce qu'**on applique sur ledit composant (2), en correspondance de ladite partie de surface (1), des premiers moyens de positionnement (4) qui coopèrent avec des deuxièmes moyens de positionnement (6) associés avec ladite tête d'écriture, lesdits premiers et lesdits deuxièmes moyens de positionnement coopérant pour permettre le positionnement automatique de la tête d'écriture du composant.

17. Procédé selon la revendication 16, **caractérisé en ce que** lesdits premiers moyens de positionnement sont réalisés par des billes d'acier (4) soudées sur la surface du composant (2), et lesdits deuxièmes moyens de positionnement sont réalisés par des sièges correspondants en forme de V appropriés pour recevoir lesdites billes (4).

18. Procédé selon la revendication 17, **caractérisé en ce que** lesdites billes (4) sont au nombre de trois.

**19.** Procédé selon la revendication 18, **caractérisé en ce que** ladite comparaison de la première structure périodique sur le composant (2) avec la deuxième structure périodique de référence est effectuée au moyen d'une tête de lecture portative qui est placée sur le composant en correspondance de ladite partie de surface (1), ladite tête de lecture comprenant une deuxième source laser (25), des moyens de transport de lumière à fibres optiques (26) pour transporter la lumière engendrée par la source laser à un collimateur (27), et un prisme optique (28) à la sortie du collimateur qui réalise une scission d'un faisceau lumineux sortant du collimateur en deux faisceaux qui forment un angle prescrit l'un par rapport à l'autre, et qui interfèrent en correspondance de la partie de surface du composant, de telle manière qu'ils engendrent un réseau d'interférences ayant un deuxième pas prescrit (P/2) qui est un sous-multiple dudit premier pas (P).

**20.** Procédé selon la revendication 19, **caractérisé en ce que** ladite deuxième source laser (25) est du type Nd-YAG.

**21.** Procédé selon la revendication 19, **caractérisé en ce que** ladite tête de lecture comprend des troisièmes moyens de positionnement, réalisés par des sièges en forme de V, dans lesquels lesdites billes d'acier sont engagées pour le positionnement automatique de la tête de lecture sur le composant (2).

**22.** Procédé selon la revendication 21, **caractérisé en ce que** ladite tête de lecture comprend une caméra vidéo (29) pour filmer l'image engendrée par la superposition du réseau d'interférences engendrées par la tête de lecture à la première structure périodique trouvée sur le composant (2), ladite caméra vidéo étant connectée à un processeur portatif (30).

**23.** Procédé selon la revendication 22, **caractérisé en ce qu'**il prévoit une phase pour le calibrage de la tête de lecture, phase dans laquelle un réseau d'interférences est formé à la sortie de la tête de lecture avec un troisième pas qui n'est pas un sous-multiple dudit premier pas (P), de sorte que par superposition dudit réseau d'interférences sur la première structure périodique formée sur le composant (2) ont crée une image comprenant une pluralité de franges de moiré ayant un pas décalé (Do).

**24.** Procédé selon la revendication 22, **caractérisé en ce que** ladite image est filmée par la caméra vidéo (29) et mémorisée dans le processeur (30) à titre d'image de référence.

**25.** Appareil pour la mesure d'une déformation d'un composant (2) dans une installation et directement sur site, l'appareil comprenant :

un ensemble d'instruments portatifs pour former, directement sur site, une première structure périodique ayant un premier pas prescrit (P) sur un composant d'une installation (2) ; et un instrument de lecture portatif pour engendrer une deuxième structure périodique ayant un deuxième pas prescrit (P/2) qui est un sous-multiple dudit premier pas (P), pour comparer ladite deuxième structure périodique avec la première structure périodique et pour élaborer une image qui contient

des franges d'interférences de moiré engendrées par la superposition de la deuxième structure périodique avec la première structure périodique, une fois que la première structure périodique a subi une variation de pas à titre de conséquence d'une déformation du composant (2) ;

ledit ensemble d'instruments portatifs incluant :

des moyens pour la déposition électrolytique d'un revêtement protecteur à l'encontre de l'oxydation sur une partie de surface polie (1) du composant (2), ledit revêtement protecteur comprenant une couche de nickel et une couche de rhodium ;

des moyens pour déposer une couche de résine photosensible sur ladite partie de surface couverte avec le revêtement protecteur ;

des moyens pour exposer ladite couche de résine photosensible à deux faisceaux lumineux monochromatiques en interférences qui engendrent sur la surface de celle-ci un premier réseau de franges d'interférences ayant un premier pas (P) avec une valeur prescrite ;

des moyens pour développer la couche de résine photosensible pour l'enlèvement sélectif de celle-ci de manière à obtenir une structure périodique ayant ledit premier pas (P) et comprenant une pluralité de bande de résines photosensibles espacées par des canaux dans lesquels le revêtement protecteur est laissé non couvert ;

des moyens pour déposer par voie électrolytique des bandes de nickel (24) dans lesdits canaux entre des bandes de résines photosensibles ;

des moyens pour enlever les bandes de résines photosensibles de manière à obtenir une grille, ayant ledit premier pas (P), formée par une pluralité de bandes de nickel (24) empreintes sur ladite partie de surface couverte avec le revêtement protecteur, pour réaliser ainsi une première structure périodique sur ladite partie (1) de ladite surface du composant (2) ;
ledit instrument de lecture portatif incluant :

des moyens pour engendrer une deuxième structure périodique avec un deuxième réseau de franges d'interférences sur la même partie de surface (1) du composant et pour comparer ladite deuxième structure périodique avec ladite première structure périodique afin de détecter la présence de frange d'interférences de moiré qui sont produites à titre de conséquence d'une variation dimensionnelle de la première structure périodique sur le composant associée avec une déformation dudit composant.

26. Appareil selon la revendication 25, **caractérisé en ce que** ledit ensemble d'instruments portatifs comprend :

un premier équipement portatif qui inclut lesdits moyens pour la déposition électrolytique de couches de matériaux sur ladite partie de surface (1) du composant (2) sur laquelle on doit former la première structure périodique ;
un deuxième équipement portatif qui inclut lesdits moyens pour la déposition d'une couche de résine photosensible ;
une tête d'écriture portative pour engendrer une première image qui contient ledit premier réseau de franges d'interférences ayant un premier pas prescrit (P) pour impressionner ladite couche de résine photosensible.

27. Appareil selon la revendication 26, **caractérisé en ce que** ledit premier équipement portatif comprend un petit réservoir (8) à appliquer sur le composant (2) et dans lequel est immergée une électrode (9), laquelle est réalisée du matériau de la couche qui s'agit de déposer sur la surface du composant, ladite électrode étant connectée à un pôle positif d'une alimentation de puissance (10) dont le pôle négatif est connecté au composant, un réservoir principal (13) contenant une solution, des moyens de recirculation (11, 14) pour permettre la recirculation de la solution entre le réservoir principal et le petit réservoir appliqué sur le composant, des moyens de filtrage (12) interposés entre le réservoir principal et le petit réservoir appliqué au composant, et des moyens thermostatiques connectés audit réservoir principal pour maintenir la solution à une température prescrite.

28. Appareil selon la revendication 26, **caractérisé en ce que** ledit deuxième équipement portatif comprend un aérographe (15) mobile le long d'un guide motorisé (16, 17) qui est applicable au composant afin de pulvériser sur la partie de surface (1) du composant une résine photosensible, et des moyens formant écran de manière à réaliser sur ladite partie de surface un écran vis-à-vis des composantes du spectre électromagnétique appropriées pour impressionner les résines photosensibles.

29. Appareil selon la revendication 26, **caractérisé en ce que** ladite tête d'écriture comprend une première source de lumière laser (20), des moyens de transport de lumière à fibres optiques (22) pour convoyer la lumière engendrée par la source laser (20) à un collimateur (21) et un ensemble de prismes optiques (23) à la sortie dudit collimateur dont le rôle est de scinder un faisceau lumineux sortant du collimateur en deux faisceaux qui forment l'un par rapport à l'autre un angle prescrit et formant en correspondance des interférences, de ladite couche de résine photosensible.

30. Appareil selon la revendication 29, **caractérisé en ce que** ladite première source laser (20) est du type He-Cd.

31. Appareil selon la revendication 25, **caractérisé en ce que** ledit instrument de lecture comprend une tête de lecture à appliquer sur le composant (2) en correspondance de ladite partie de surface (1), ladite tête de lecture comprenant une deuxième source laser (25), des moyens de transport de lumière à fibres optiques (26) pour transporter la lumière engendrée par la source laser jusqu'à un collimateur (27) et un premier prisme optique (28) à la sortie du collimateur qui assure la scission d'un faisceau de lumière sortant du collimateur en deux faisceaux formant un angle prescrit l'un par rapport à l'autre et qui interfèrent en correspondance sur la partie de surface (1) du composant de manière à engendrer ladite deuxième structure périodique avec un deuxième réseau de franges d'interférences ayant un deuxième pas prescrit (P/2) qui est un sous-multiple dudit premier pas (P), la tête de lecture incluant également une caméra vidéo (29) pour prendre l'image des franges de moiré produites par la superposition du deuxième réseau de franges d'interférences sur le premier réseau, et un processeur (30) pour traiter l'image prise par la caméra vidéo (29) et pour calculer la valeur de la déformation du composant à l'aide de ladite image.

32. Appareil selon la revendication 26, **caractérisé en ce que** ladite tête d'écriture portative comprend :

lesdits moyens pour exposer ladite couche de résine photosensible à deux faisceaux lumineux monochromatiques en interférences qui engendrent sur la surface de celle-ci un premier réseau de franges d'interférences ayant un premier pas (P) ; et

des moyens pour développer la couche de résine photosensible pour l'enlèvement sélectif de celle-ci de manière à obtenir une première structure périodique ayant ledit premier pas (P) et comprenant une pluralité de bandes de résines photosensibles espacées par des canaux dans lesquels le revêtement protecteur est laissé à découvert.

Fig. 1

Fig. 2

Fig. 3

Fig. 4

Fig. 5

Fig. 6A

Fig. 6B

Fig. 7

Fig. 8A

Fig. 8B

Fig. 8C